# EUROPÄISCHE PATENTSCHRIFT

(11) **EP 0 882 102 B1**
(45) Veröffentlichungstag und Bekanntmachung des Hinweises auf die Patenterteilung: **11.08.1999**
(21) Anmeldenummer: 97900588.1
(22) Anmeldetag: 10.01.1997
(51) Int. Cl.: C09D 7/14, C09D 5/02, C09D 175/04, C08J 3/22

(54) **VERFAHREN ZUR HERSTELLUNG VON WÄSSRIGEN BESCHICHTUNGSMITTELN FÜR DIE LACKIERUNG VON FAHRZEUGINNENRÄUMEN**
MULTI-STAGE METHOD OF PRODUCING AQUEOUS PAINTS FOR VEHICLE INTERIORS
PROCEDE DE PRODUCTION, EN PLUSIEURS ETAPES, D'AGENTS DE REVETEMENT AQUEUX POUR LA MISE EN PEINTURE D'HABITACLES DE VEHICULES

(30) Priorität: 19.02.1996 DE 19606022
(43) Veröffentlichungstag der Anmeldung: 09.12.1998
(73) Patentinhaber: BASF Coatings Aktiengesellschaft, 48165 Münster (DE)
(72) Erfinder: LIEDTKE, Hermann, D-25551 Hohenlockstedt (DE)
(74) Vertreter: Fitzner, Uwe, Dr.
(86) Internationale Anmeldenummer: EP9700091
(87) Internationale Veröffentlichungsnummer: WO9730128

(56) Entgegenhaltungen:
- EP-A- 0 614 951
- WO-A-92/17554
- DE-A- 4 232 721

## Beschreibung

### Gebiet der Erfindung

Die Erfindung betrifft mehrstufige Verfahren zur Herstellung von waßrigen Beschichtungsmitteln BM für die Lackierung von Fahrzeuginnenräumen, umfassend folgende Stufen:
I. Herstellung einer Vormischung VM, enthaltend eine pigmenthaltige Komponente A), eine bindemittelhaltige Komponente B) sowie eine vernetzerhaltige Komponente C) oder eine rheologiesteuernde Komponente D),
und anschließend
II. Herstellung eines wäßrigen Beschichtungsmittels BM aus der Vormischung VM und der rheologiesteuernden Komponente D) oder der vernetzerhaltigen Komponente C), sofern diese Komponenten nicht in der Vormischung VM enthalten sind, sowie abschließende Einstellung der Verarbeitungsviskosität des Beschichtungsmittels BM durch Zugabe von entionisiertem Wasser als Komponente E).

### Stand der Technik

Mehrkomponentige Mischsysteme auf wäßriger Basis für die Autoserienlackierung bzw. für die Reparaturlackierung von Schadstellen, insbesondere für die Autoreparaturlackierung sind bekannt.

DE-A-42 32 721 beschreibt zweikomponentige Mischsysteme, bestehend aus verschiedenen Basisfarben, die weniger als 5 Gew.-% Wasser enthalten, mindestens einem farb- und/oder effektgebendem Pigment, organischem Lösemittel, gegebenenfalls Hilfs- und Zusatzstoffen und einem wasserverdünnbaren Bindemittel sowie bestehend aus einer wasserenthaltenden, pigmentfreien Komponente. Die in den Basisfarben eingesetzten Bindemittel umfassen mindestens ein wasserverdünnbares oder wasserdispergierbares acryliertes Polyurethanharz und/oder mindestens ein wasserverdünnbares oder wasserdispergierbares Polyacrylatharz. Bevorzugt werden die in DE-A 42 32 721 beschriebenen Mischsysteme als wäßrige Überzugsmittel zur Erzeugung einer Basislackschicht eingesetzt. Nach Antrocknung der solchermaßen hergestellten Basislackschichten wird eine geeignete transparente Decklackbeschichtungszusammensetzung aufgebracht. Als Decklacke geeignet sind sowohl organisch gelöste als auch wäßrige 1- oder 2-Komponenten-Klarlacke als auch Pulverklarlacke. Häufig eingesetzt werden 2-Komponenten-Klarlacke auf Basis eines hydroxylgruppenhaltigen Acrylatcopolymerisats und eines Polyisocyanats. Derartige Klarlacke sind beispielsweise in DE-A-34 12 534, DE-A-36 09 519, DE-A-37 31 652 und DE-A-38 23 005 beschrieben. Geeignete 1-Komponenten-Klarlacke, beispielsweise auf Basis eines hydroxylgruppenhaltigen Bindemittels und eines Aminoharzhärters, sind ebenfalls bekannt und beispielsweise in Kittel, Lehrbuch der Lacke und Beschichtungen, Band IV, Verlag W.A.Colomb in der H.Heeremann GmbH, Berlin-Oberschwandorf, 1976 beschrieben.Im allgemeinen wird nach einer gegebenenfalls erforderlichen Ablüftzeit die Basisschicht zusammen mit der Deckschicht getrocknet.

### Aufgabe und Lösung

Die Anforderungen an die Lackierung von Serienteilen oder an die Autoreparaturlackierung orientieren sich an den hohen Ansprüchen, die an solche Lackierungen hinsichtlich mechanischer Festigkeit, beispielsweise gegen Stoß oder Steinschlag, brillianter Oberfläche und Witterungsstabilität gestellt werden und die sich an der Außenlackierung von Fahrzeugteilen orientieren.
Solche Anforderungen bedingen technologisch komplexe Mehrschichtlackierungen, beispielsweise wie oben beschrieben bestehend aus Basis- und Decklackschicht, deren Applikation aufwendig ist. Fahrzeuginnenlackierungen müssen solchen Anforderungen nur teilweise genügen. Insbesondere die hohen Anforderungen an die mechanische Festigkeit, an die Brillianz der Lackoberfläche und an die Witterungsstabilität werden nicht in dem Maße wie bei Außenlackierungen gestellt. Demgegenüber bestehen hohe Anforderungen an die Farbgleichheit von Innen- und Außenlackierung.
Aufgabe der vorliegenden Erfindung war daher, bestehende Beschichtungsmittel, beispielsweise hergestellt aus Mischsystemen, für die Herstellung von Basislackschichten bei der Außenlackierung von Fahrzeugen solchermaßen zu modifizieren, daß für die Innenlackierung von Fahrzeugen Bestandteile solcher Mischsysteme verwendet werden können, welche insbesondere die Farbgleichheit gewährleisten, und daß keine Decklackschichten bei der Innenlackierung notwendig werden.

Überraschenderweise wurde gefunden, daß wäßrige Beschichtungsmittel BM für die Lackierung von Fahrzeuginnenräumen, die den aufgabengemäßen Kriterien hervorragend entsprechen, auf eine einfache Weise hergestellt werden können, indem
I. eine Vormischung VM, bestehend aus A) verschiedenen Basisfarben (A) nach DE-A-42 32 721, die weniger als 5 Gew.-% Wasser, mindestens ein farb- und/oder effektgebendes Pigment, organische Lösemittel sowie mindestens ein wasserververdünnbares oder wasserdispergierbares hydroxylgruppenhaltiges Bindemittel, bevorzugt ein wasserverdünnbares oder wasserdispergierbares hydroxylgruppenhaltiges Polyacrylatharz (A2) mit einer Hydroxylzahl von 5 bis 40 mg KOH/g und/oder mindestens ein wasserverdünnbares oder wasserdispergierbares hydroxylgruppenhaltiges, gegebenenfalls acryliertes Polyurethanharz (A1) mit einer Hydroxylzahl von 20 bis 100 mg KOH/g enthalten, sowie aus B) mindestens einer wäßrigen, pigmentfreien Komponente, enthaltend mindestens ein gegebenenfalls hydroxylgruppenhaltiges Bindemittel (B1), sowie aus C) einer Lösung oder einer Dispersion eines Di- und/oder Polyisocyanats (C1) oder eines Gemischs aus Polyisocyanaten (C1) oder alternativ zu C) aus D) einer wäßrigen Lösung oder Dispersion eines Rheologiehilfsmittels (D1) hergestellt wird,
sowie anschließend
II. zur Herstellung des wäßrigen Beschichtungsmittels BM als Komponente D) eine wäßrige Lösung oder eine wäßrige Dispersion oder eine wäßrige Lösung eines Rheologiehilfsmittels (D1) oder alternativ als Komponente C) eine Lösung oder eine Dispersion eines Polyisocyanats (C1) oder eines Gemischs von Polyisocyanaten (C1) zur Vormischung VM zugemischt wird, sofern die jeweilige Komponente C) oder D) nicht in der Vormischung VM enthalten ist und abschließend zur Einstellung der Verarbeitungsviskosität des wäßrigen Beschichtungsmittels BM die Zugabe von entionisiertem Wasser als Komponente E) erfolgt.

Die solchermaßen hergestellten Sprühlacke können für die Fahrzeuginnenlackierung ohne zusätzliche Applikation eines Decklacks eingesetzt werden.

Bevorzugt sind die in der Komponente A) verwendeten Basisfarben (A) wasserfrei.

Die eingesetzten Di- und/oder Polyisocyanate (C1) oder deren Gemische sind vorzugsweise Isomeren oder Isomerengemische von aliphatischen und/oder cycloaliphatischen und/oder aromatischen Di- und/oder Polyisocyanaten in organischer oder wäßriger Lösung oder in organischer oder wäßriger Dispersion.

### Durchführung der Erfindung

### Die Komponenten des wäßrigen Beschichtungsmittels BM

### Die Bestandteile der Komponente A)

Die Komponente A) des Mischsystems kann alle lacküblichen Pigmente enthalten, vorausgesetzt, daß diese nicht innerhalb kurzer Zeit, beispielsweise der Zeitspanne zwischen der Herstellung der wäßrigen Beschichtungsmittel BM gemäß dem erfindungsgemäßen Verfahren und der Applikation der wäßrigen Beschichtungsmittel, mit Wasser reagieren und daß sie sich nicht in Wasser lösen. Die Komponente A) kann dabei Effektpigmente und/oder farbgebende Pigmente auf anorganischer oder organischer Basis enthalten. Um eine möglichst universelle Einsatzbreite zu gewährleisten und möglichst viele Farbtöne realisieren zu können, ist es bevorzugt, als Komponente A) ein Mischsystem auf Basis von nur farbgebende Pigmente enthaltenden Komponenten und nur Effektpigmente enthaltenden Komponenten aufzubauen.
Zur Herstellung der Komponente A) können alle üblicherweise bei der Formulierung von wäßrigen Überzugsmitteln eingesetzten Effektpigmente verwendet werden. Beispiele für geeignete Effektpigmente sind handelsübliche Aluminiumbronzen, die gemäß DE-A-36 36 183 chromatierten Aluminiumbronzen, Edelstahlbronzen sowie andere übliche Metallflocken- oder Metallplättchenpigmente. Desweiteren sind als Effektpigmente Perlglanz- bzw. Interferenzpigmente geeignet.
Beispiele für farbgebende Pigmente auf anorganischer Basis sind Titandioxid, Eisenoxide, Ruße und andere. Beispiele fur organische farbgebende Pigmente sind Indanthrenblau, Chromophthalrot, Irgazinorange, Sicotransgelb, Heliogengrün und andere.

Als hydroxylgruppenhaltige Bindemittel für den Einsatz in der Komponente A) bevorzugt sind die bereits genannten wasserverdünnbaren bzw. wasserdispergierbaren gegebenenfalls acrylierten Polyurethane (A1) und/oder Polyacrylate (A2), die üblicherweise in wäßrigen Beschichtungsmitteln eingesetzt werden und die sich in organischer Form darstellen lassen. Die Wasserverdünnbarkeit bzw. Wasserdispergierbarkeit der Harze kann dabei auch durch Verwendung entsprechender Losevermittler als Cosolvens bzw. Solvens eingestellt werden. Entscheidend für die Auswahl der Bindemittel ist einerseits die gute Lagerstabilität in organischer Lösung, insbesondere auch die Fähigkeit, ein Absetzen der Pigmente zu vermeiden, sowie gegebenenfalls andererseits die problemlose Einarbeitbarkeit der Basisfarbe in die Komponente B) bzw. umgekehrt.
Derartige als Bindemittel in der Komponente A) des erfindungsgemäßen Beschichtungsmittels verwendete gegebenfalls acrylierte Polyurethane (A1) sowie deren Herstellung sind beispielsweise in der DE-A-40 10 176 beschrieben.
Das gegebenenfalls acrylierte Polyurethan (A1) wird bevorzugt nach gut bekannten Methoden der Polyurethanchemie aus den in DE-A-42 32 721 beschriebenen Bausteinen (Aiia) bis (Aiif) hergestellt.

Das Molekulargewicht der Polyurethanharze kann - wie dem Fachmann bekannt - insbesondere durch das Mengenverhältnis und die Funktionalität der eingesetzten Ausgangsverbindungen gemäß DE-A-42 32 721 gesteuert werden.
Die Polyurethanharze können sowohl in Substanz als auch in organischen Lösemitteln hergestellt werden.
Eine detaillierte Beschreibung der Umsetzung, der Art und der einzusetzenden Mengen der Bausteine (Aiia) bis (Aiif) kann der DE-A-42 32 721 entnommen werden.

Die acrylierten Polyurethanharze (A1') werden gemäß DE-A-42 32 721 hergestellt, indem eine Lösung des Polyurethanharzes (A1) in einem organischen Lösemittel bzw. einem organischen Lösemittelgemisch bereitgestellt wird und in dieser Lösung ethylenisch ungesättigte Monomere oder ein Gemisch ethylenisch ungesättigter Monomerer in einer radikalischen Polymerisation polymerisiert werden und das so erhaltene Reaktionsprodukt in eine wäßrige Dispersion überführt wird. Als ethylenisch ungesättigte Monomere können gemäß DE-A-42 32 721 praktisch alle radikalisch polymerisierbaren Monomere eingesetzt werden, wobei jedoch die üblichen Einschränkungen für Copolymerisationen gelten, die durch das Q- und e-Schema nach Alfrey und Price bzw. durch die Copolymerisationsparameter vorgegeben sind (vgl. z.B. Brandrup und Immergut, Polymer Handbook, 2nd ed. John Wiley + Sons, New York (1975)).
Eine detaillierte Aufstellung der ethylenisch ungesättigten Monomeren kann der DE-A-42 32 721 entnommen werden.

Die erfindungsgemäß eingesetzten, nach DE-A-42 32 721 hergestellten Polymere müssen zur Anionenbildung befähigte Gruppen enthalten, die vor oder während der Überführung der Polymere aus dem organischen Lösemittel bzw. Lösemittelgemisch in Wasser neutralisiert werden und die Bildung stabiler wäßriger Dispersionen ermöglichen. Die in Rede stehenden Polymere können neben den zur Anionenbildung befähigten Gruppen auch noch nichtionische stabilisierende Gruppen wie z.B. Poly(oxyalkylen)gruppen, insbesondere Poly(oxyethylen)- und/oder Poly(oxypropylen)- und/oder Poly(oxyethylen)(oxypropylen)gruppen enthalten.
Die Einführung der zur Anionenbildung befähigten Gruppen in die in Rede stehenden Polymere ist beispielsweise in DE-A-42 32 721 beschrieben.

Als wasserlösliche bzw. wasserdispergierbare Bindemittelkomponente der Komponente A) des erfindungsgemäßen Mischsystems weiterhin bevorzugt sind wasserverdünnbare oder wasserdispergierbare Polyacrylatharze (A2), wie sie beispielsweise in DE-A-42 32 721 beschrieben sind.

Die Summe der Gewichtanteile der in DE-A-42 32 721 beschriebenen monomeren Komponenten des Polyacrylatharzes (A2) werden in Art und Menge so ausgewählt, daß das Polyacrylatharz (A2) eine Hydroxylzahl von 5 bis 40, vorzugsweise 5 bis 35 mg KOH/g, eine Säurezahl von 20 bis 100, vorzugsweise 25 bis 50 mg KOH/g und eine Glasübergangstemperatur (T_{G}) von -40 Grad C bis +60 Grad C, vorzugsweise -20 Grad C bis +40 Grad C, aufweist.

Eine detaillierte Beschreibung der Monomeren sowie der Herstellung der Polyacrylatharze (A2) kann der DE-A-42 32 721 entnommen werden.

Als Bindemittel können in den Komponenten A) selbstverständlich auch Mischungen der genannten Bindemittel (A1) und (A2) sowie zusätzlich andere wasserverdünnbare bzw. wasserdispergierbare bevorzugt hydroxylgruppenhaltige Bindemittel eingesetzt werden.

Es ist erfindungswesentlich, daß die Basisfarben (A) im wesentlichen wasserfrei, bevorzugt völlig wasserfrei sind. Der Wassergehalt der Basisfarben (A) sollte weniger als 5 Gew.-%, bezogen auf das Gesamtgewicht der Basisfarbe (A), betragen.
Als Lösemittel enthält die Basisfarbe (A) ein oder mehrere organische Lösemittel. Beispiele für geeignete Lösemittel sind insbesondere wasserlösliche bzw. wasserverdünnbare Lösemittel, wie z.B. Alkohole, Ester, Ketone, Ketoester, Glykoletherester und ähnliche. Bevorzugt eingesetzt werden Alkohole und Glykolether, besonders bevorzugt Butylglykol und Butanole.
Es besteht dabei die Möglichkeit, wie in DE-A-42 32 721 beschrieben, bereits bei der Herstellung der Bindemittel Lösemittel einzusetzen, die auch später als Lösemittel in der Basisfarbe verbleiben. Häufiger wird jedoch zur Herstellung der Bindemittel ein anderes Lösungsmittel eingesetzt, das nach der Herstellung der Bindemittel durch Vakuumdestillation oder Dünnschichtverdampfung schonend abdestilliert und durch ein Lösemittel ersetzt wird, das in der Bindemittellösung verbleibt, die dann in der Basisfarbe eingesetzt wird. Höhersiedende Lösemittel sollten wasserlöslich sein und verbleiben in der Polyurethanharzlösung, die in der Basisfarbe eingesetzt wird, um das Zusammenfließen der Polymerteilchen während der Filmbildung zu erleichtern.

Die Komponente A) kann außerdem noch 0 bis 10 Gew.-%, bezogen auf A), übliche Hilfs- und Zusatzstoffe enthalten. Beispiele für derartige Additive sind Entschäumer, Dispergierhilfsmittel, Emulgatoren, Verlaufsmittel und andere.

Bevorzugt enthält die Komponente A)
Aa) 0,5 bis 70 Gew.-% mindestens eines Effektpigments und/oder mindestens eines farbgebenden Pigments,
Ab) 10 bis 80 Gew.-% mindestens eines wasserverdünnbaren oder wasserdispergierbaren hydroxylgruppenhaltigen Bindemittels,
Ac) mindestens ein organisches Lösemittel, sowie gegebenenfalls
Ad) Hilfs- und Zusatzstoffe,
wobei die Summe der Gewichtsanteile der Komponenten Aa) bis Ad) jeweils 100 Gew.-% der Komponente A) ausmacht.

Besonders bevorzugt wird die Komponente A) aus Basisfarben (A'), die nur Effektpigmente enthalten und Basisfarben (A"), die nur farbgebende Pigmente enthalten, aufgebaut.

Besonders bevorzugte Basisfarben (A') auf der Basis von Effektpigmenten enthalten
Aa) 0,5 bis 50 Gew.-% mindestens eines Effektpigments,
Ab) 20 bis 80 Gew.-% des wasserverdünnbaren oder wasserdispergierbaren hydroxylgruppenhaltigen Bindemittels und
Ac) mindestens ein organisches Lösemittel,
wobei die Summe der Gewichtsanteile der Komponenten Aa) bis Ac) jeweils 100 Gew.-% beträgt.

Besonders bevorzugte Basisfarben (A") auf der Basis anorganischer farbgebender Pigmente enthalten
Aa) 1 bis 70 Gew.-% mindestens eines anorganischen farbgebenden Pigments,
Ab) 10 bis 80 Gew.-% mindestens eines wasserverdünnbaren oder wasserdispergierbaren hydroxylgruppenhaltigen Bindemittels und
Ac) mindestens ein organisches Lösemittel,
wobei die Summe der Gewichtsanteile der Komponenten Aa) bis Ac) jeweils 100 Gew.-% beträgt.

Besonders bevorzugte Basisfarben (A") auf der Basis organischer farbgebender Pigmente enthalten
Aa) 1 bis 30 Gew.-% mindestens eines organischen farbgebenden Pigments,
Ab) 10 bis 80 Gew.-% des eines wasserverdünnbaren oder wasserdispergierbaren hydroxylgruppenhaltigen Bindemittels und
Ac) mindestens ein organisches Lösemittel,
wobei die Summe der Gewichtsanteile der Komponenten Aa) bis Ac) jeweils 100 Gew.-% beträgt.

Selbstverständlich können auch Basisfarben (A) eingesetzt werden, die eine Kombination aus mindestens einem organischen farbgebenden und mindestens einem anorganischen farbgebenden Pigment enthalten.
Zu weiteren Kriterien für die Basisfarben (A) sei auf die DE-A-41 10 520 verwiesen.
Die Herstellung der Komponente A) erfolgt nach dem Fachmann bekannten Methoden durch Mischen und gegebenenfalls Dispergieren der einzelnen Komponenten. So erfolgt die Einarbeitung von farbgebenden Pigmenten üblicherweise durch Anreiben (Dispergieren) der jeweiligen Pigmente mit einem oder mehreren der oben beschriebenen Bindemittel, die bevorzugt in Form ihrer Lösungen in organischen Lösemitteln eingesetzt werden. Gegebenenfalls kann zum Anreiben noch weiteres organisches Lösemittel zugesetzt werden. Das Anreiben dieser Pigmente erfolgt mit Hilfe üblicher Vorrichtungen, wie beispielsweise Perlmühlen und Sandmühlen.
Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der oben beschriebenen Bindemittel, gegebenenfalls unter Zusatz von weiteren organischen Lösemitteln, mittels eines Rührers oder Dissolvers eingerührt. Die Bindemittel werden bevorzugt in Form ihrer Lösungen in organischen Lösemitteln eingesetzt.
Die jeweiligen Mengenverhältnisse an Pigment, Bindemittel und Lösemittel richten sich dabei, wie dem Fachmann geläufig ist, nach dem Fließverhalten der Pigmentpaste und sind damit abhängig von dem jeweils verwendeten Pigment.
Eine ausführliche Beschreibung der Herstellung der Komponente A) kann der DE-A-41 10 520 entnommen werden.

### Die Bestandteile der Komponente B)

Die wäßrige Komponente B) ist pigmentfrei und enthält mindestens ein Bindemittel (B1). Gegebenenfalls kann die Komponente B) noch weitere Hilfs- und Zusatzstoffe, ein oder mehrere wasserverdünnbare bzw. wasserdispergierbare Bindemittel und organische Lösemittel enthalten.
Als Bindemittel (B1) für den Einsatz in der Komponente B) bevorzugt geeignet sind die bereits bei der Beschreibung der Komponente A) aufgeführten wasserverdünnbaren oder wasserdispergierbaren hydroxylgruppenhaltigen Polyacrylatharze (A2) und die wasserverdünnbaren oder wasserdispergierbaren hydroxylgruppenhaltigen, gegebenenfalls acrylierten Polyurethanharze (A1), sowie desweiteren wasserverdünnbare bzw. wasserdispergierbare bevorzugt hydroxylgruppenhaltige andere Polyurethan-, andere Polyacrylat-, Polyester- und Aminoplastharze.
Diese Bindemittel (B1) können beim Einsatz in der Komponente B) nicht nur als organische Lösung, sondern auch bevorzugt in einer wasserenthaltenden Form eingesetzt werden. Die Überführung der Harze in die wäßrige Phase erfolgt beispielsweise durch Neutralisation der Trägergruppen (zur Anionen- oder Kationenbildung fähige Gruppen, wie zum Beispiel Carboxylgruppen) und anschließendes Verdünnen mit Wasser, gegebenenfalls unter vorheriger teilweiser Entfernung des bei der Herstellung des Harzes eingesetzten organischen Lösemittels oder durch direkten Aufbau des Harzes in Gegenwart von Wasser. Wegen weiterer Einzelheiten sei auf die Literatur verwiesen, in denen die Herstellung der Harze beschrieben ist (vgl. z.B. DE-A-32 10 051, DE-A-26 24 442, DE-A-37 39-332, US-PS-4,719,132, EP-A-89 497, US-PS-4,558,090, US-PS-4,489,135, EP-A-38 127, DE-A-36 28 124, EP-A-158 099, DE-A-29 26 584, EP-A-195 931 und DE-A-33 21 180).

Ferner sind als Bindemittel (B1) für die Komponente B) auch wasserverdünnbare bzw. wasserdispergierbare Polyurethanharze geeignet, die sich nicht in Form organischer Lösungen darstellen lassen. Dabei handelt es sich insbesondere um Polyurethanharze, bei denen das isocyanatgruppenhaltige Präpolymer mit einem Polyamin als Modifizierungsmittel umgesetzt wurde. Die Herstellung dieser Polyurethanharze ist beispielsweise in DE-A-42 32 721 beschrieben.

Ferner sind als wasserverdünnbare bzw. wasserdispergierbare Bindemittel (B1) für die Komponente B) auch die in der DE-A-38 41 540 beschriebenen wasserverdünnbaren Emulsionspolymere geeignet. Bezüglich näherer Einzelheiten wird auf die DE-A-38 41 540 verwiesen.

Die wäßrige Komponente B) kann außerdem gegebenenfalls noch ein oder mehrere organische Lösemittel in untergeordneten Mengen sowie gegebenenfalls noch weitere übliche Hilfs- und Zusatzstoffe enthalten. Beispiele für geeignete organische Lösemittel sind die bereits bei der Beschreibung der Komponente A) aufgeführten Lösemittel. Der Gehalt an organischem Lösemittel beträgt üblicherweise 0 bis 3 Gew.-%, bezogen auf das Gesamtgewicht der Komponente B).
Beispiele für geeignete Hilfs- und Zusatzstoffe sind ebenfalls die bei der Beschreibung der Komponente A) genannten Additive. Die Einsatzmenge dieser Additive beträgt üblicherweise 0 bis 10 Gew.-%, bezogen auf das Gesamtgewicht der Komponente B).

### Die Bestandteile der Komponente C)

Die Komponente C) enthält mindestens ein Vernetzungsmittel (C1) auf Basis von Di- oder Polyisocyanaten oder aus Gemischen davon. Grundsätzlich können hierbei die auch schon bei der Beschreibung der Komponente (Aiib) genannten Verbindungen als Vernetzungsmittel (C1) eingesetzt werden.

Als Vernetzungsmittel (C1) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.
Aufgrund ihrer guten Beständigkeit gegenüber ultraviolettem Licht ergeben (cyclo)aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel

OCN-(CR³ ₂)r-NCO

worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocyanat.

Als weiteres Beispiel für ein bevorzugtes aromatisches Diisocyanat (C1) wird Tetramethylxyloldiisocyanat genannt.

Das Vernetzungsmittel (C1) kann neben Diisocyanaten auch einen Anteil an Polyisocyanaten mit Funktionalitäten über zwei, wie z.B. Triisocyanate, enthalten.
Als Triisocyanate haben sich Produkte bewährt, die durch Trimerisation oder Oligomerisierung von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechende Monoisocyanate sind Phenylisocyanat, Cyclohexylisocyanat und Stearylisocyanat.

Das Vernetzungsmittel (C1) kann für sich allein genommen als Mischkomponente C) sowie vorzugsweise in Lösung oder Dispersion in einem flüssigen Lösemittel (C2) eingesetzt werden. Als Lösemittel (C2) geeignet sind bevorzugt organische Lösemittel,die keine Reaktion mit dem Vernetzungsmittel zeigen. Als Beispiele für geeignete organische Lösemittel (C2) seien Ester, Ketone, Ketoester, Glykoletherester und ähnliche genannt.
Sollen Wasser oder wasserverdünnbare Lösemittel (C2) verwendet werden, ist eine Vormischung mit dem Vernetzungsmittel (C1) vorzuziehen, um einerseits die Viskosität in gewünschter Weise einzustellen und andererseits eine Reaktion des Vernetzungsmittels, beispielsweise mit den Hydroxylgruppen der Bindemittel, zu vermeiden.

### Die Bestandteile der Komponente D)

Die Komponente D) besteht im wesentlichen aus einer waßrigen Lösung oder Dispersion eines Rheologiehilfsmittels (D1).
Das Rheologiehilfsmittel (D1) beeinflußt die Applikationseigenschaften der erfindungsgemäßen wäßrigen Überzugsmittel ganz entscheidend. So hängt beispielsweise bei Metallpigmente enthaltenden wäßrigen Überzugsmittel die Orientierung der Metallpigmentteilchen und damit der erreichbare Metalleffekt ganz wesentlich von den rheologischen Eigenschaften des wäßrigen überzugsmittels ab.

Bevorzugt werden als Rheologiehilfsmittel (D1) Schichtsilikate eingesetzt, die in Wasser aufquellen und Gele bilden, welche unter Scherbeanspruchung eine hohe Fließgrenze und eine niedrige plastische Viskosität aufweisen.
Ganz besonders bevorzugt werden Schichtsilikat-Dispersionen gemäß DE-A-37 07 388 verwendet, die aus Schichtsilikaten, einem Schutzkolloid und einem wäßrigen Dispersionsmittel erhältlich sind, wobei als Schutzkolloid ein Poly(propylenoxid) verwendet wird, welches keine hydrophoben Endgruppen aufweist und im Mittel mindestens eine Hydroxylgruppe pro Molekül aufweist.

### Das erfindungsgemäße Verfahren zur Herstellung der wäßrigen Beschichtungsmittel BM sowie deren Applikation

Das erfindungsgemäße Verfahren zur Herstellung der wäßrigen Beschichtungsmittel zur Lackierung von Fahrzeuginnenräumen umfaßt folgende Stufen:
In einer Ausführungsform der Erfindung wird
I. eine Vormischung VM aus bevorzugt 5 bis 85 Gew.-%, besonders bevorzugt 10 bis 75 Gew.-%, der zuvor beschriebenen pigmenthaltigen Komponente A), bevorzugt 10 bis 90 Gew.-%, besonders bevorzugt 15 bis 85 Gew.-%, der zuvor beschriebenen bindemittelhaltigen Komponente B) und bevorzugt 5 bis 50 Gew.-%, besonders bevorzugt 10 bis 40 Gew.-%, der zuvor beschriebenen vernetzerhaltigen Komponente C) hergestellt, wobei die Summe der Komponenten A), B) und C) 100 Gew.-% der Vormischung VM ausmacht,
sowie anschließend
II. bevorzugt 10 bis 95 Gew.-%, besonders bevorzugt 20 bis 90 Gew-%, der Vormischung VM mit bevorzugt 5 bis 90 Gew.-%, besonders bevorzugt mit 10 bis 80 Gew.-%, der zuvor beschriebenen rheologiesteuernden Komponente D) zum wäßrigen Beschichtungsmittel BM gemischt, wobei die Summe der Vormischung VM und der Komponente D) 100 Gew.-% des wäßrigen Beschichtungsmittels BM ausmacht, und abschließend die Verarbeitungsviskosität des wäßrigen Beschichtungsmittels durch Zugabe von entionisiertem Wasser als Komponente E) bevorzugt auf 15 bis 40 Sekunden (DIN4-Becher) eingestellt.

In einer weiteren gleichberechtigten Ausführungsform der Erfindung wird
I. eine Vormischung VM aus bevorzugt 5 bis 85 Gew.-%, besonders bevorzugt 10 bis 75 Gew.-%, der zuvor beschriebenen pigmenthaltigen Komponente A), bevorzugt 10 bis 90 Gew.-%, besonders bevorzugt 15 bis 85 Gew.-%, der zuvor beschriebenen bindemittelhaltigen Komponente B) und bevorzugt 5 bis 85 Gew.-%, besonders bevorzugt 10 bis 75 Gew.-%, der zuvor beschriebenen rheologiesteuernden Komponente D) hergestellt, wobei die Summe der Komponenten A), B) und D) 100 Gew.-% der Vormischung VM ausmacht,
sowie anschließend
II. bevorzugt 50 bis 95 Gew.-%, besonders bevorzugt 60 bis 90 Gew-%, der Vormischung VM mit bevorzugt 5 bis 50 Gew.-%, besonders bevorzugt mit 10 bis 40 Gew.-%, der zuvor beschriebenen vernetzerhaltigen Komponente C) zum wäßrigen Beschichtungsmittel BM gemischt, wobei die Summe der Vormischung VM und der Komponente C) 100 Gew.-% des wäßrigen Beschichtungsmittels BM ausmacht, und abschließend die Verarbeitungsviskosität des wäßrigen Beschichtungsmittels BM mit entionisiertem Wasser als Komponente E) bevorzugt auf 15 bis 40 Sekunden (DIN 4-Becher) eingestellt.

Die Herstellung der Vormischung VM und des erfindungsgemäßen wäßrigen Beschichtungsmittels BM erfolgen nach dem Fachmann bekannten Methoden durch Mischen und gegebenenfalls Dispergieren der einzelnen Komponenten.

Die unter Verwendung des erfindungsgemäßen Mischsystems hergestellten wäßrigen Beschichtungsmittel BM werden bevorzugt in Fahrzeuginnenräumen auf nach dem Stand der Technik vorbereitete Untergrunde aufgebracht, beispielsweise bei der Autoserienlackierung und insbesondere bei der Autoreparaturlackierung, und/oder bei der Beschichtung von Kunststoffteilen. Besonders von Vorteil ist, daß die Beschichtungen mit den erfindungsgemäßen Lacken in Fahrzeuginnenräumen keine zusätzliche Beschichtung durch einen transparenten Decklack erfordern.
Die wäßrigen Beschichtungsmittel BM werden direkt nach ihrer Herstellung nach dem erfindungsgemäßen Verfahren auf die entsprechend vorbereitete Schadstelle (z. B. durch Spachteln und Füllern) mittels üblicher Methoden, insbesondere durch Spritzlackierung, aufgebracht.

Die solchermaßen hergestellte Schicht wird bei Raumtemperatur oder durch forcierte Trocknung (z.B. 10 min. bei 60 Grad C, 80 Grad C oder durch IR-Trocknung) gehärtet. Die Trockenfilmschichtdicken der matten Lackschicht liegen zwischen 5 und 100, bevorzugt zwischen 10 und 70 Mikrometern.

Im folgenden wird die Erfindung anhand von Ausführungsbeispielen näher erläutert. Alle Angaben über Teile und Prozente stellen dabei Gewichtsangaben dar, falls nicht ausdrücklich etwas anderes vermerkt ist.

### Beipiele

### Beispiel 1: Herstellung der Basisfarben (A') und (A") für die Komponente A)

### Herstellung eines Polyurethanharzes (A1) als Bindemittel für die Basisfarben (A') und (A"):

In einem geeigneten Reaktionsgefäß mit Rührer, Rückflußkühler und Zulaufgefäß werden unter Schutzgas 686,3 g eines Polyesters mit einem zahlenmittleren Molekulargewicht Mn von 1400 Dalton auf Basis einer handelsüblichen ungesättigten Dimerfettsäure (mit einer Iodzahl von 10 mg I₂/g, einem Monomerengehalt von maximal 0,1%, einem Trimergehalt von maximal 2%, einer Säurezahl von 195 bis 200 mg KOH/g und einer Verseifungszahl von 197 bis 202 mg KOH/g), Isophthalsäure und Hexandiol vorgelegt und nacheinander mit 10,8 g Hexandiol, 55,9 g Dimethylolpropionsäure, 344,9 g Methylethylketon und 303,6 g 4,4'-Di(isocyanatocyclohexyl)methan versetzt.
Diese Mischung wird solange unter Rückfluß gehalten, bis der Isocyanatgehalt auf 1,0% abgesunken ist. Anschließend werden dem Gemisch 26,7 g Trimethylolpropan zugegeben und bis zu einer Viskosität von 12 dPas (bei einer Anlösung von Harz:N-Methylpyrrolidon = 1:1) unter Rückfluß gehalten. Dann werden 1378,7 g Butylglykol zugegeben.
Nach einer Vakuumdestillation, in der das Methylethylketon entfernt wird, wird die Harzlösung mit 32,7 g Dimethylethanolamin neutralisiert.
Der Feststoffgehalt der resultierenden Lösung des Polyurethanharzes (A1) beträgt 44 Gew.-%. Die erhaltene Masse wird unter intensivem Rühren mit Butylglykol auf einen Festkörper von 41 Gew.-% verdünnt.

### Herstellung der Basisfarbe (A'):

20 Gew.-Teile einer gemäß DE-A-36 36 183 chromatierten Aluminiumbronze (Aluminiumgehalt 65%, durchschnittlicher Teilchendurchmesser: 15 Mikrometer) werden in 9 Gew.-Teilen Butylglykol und 7 Gew.-Teilen iso-Butanol durch 15-minütiges Rühren homogen verteilt und anschließend in 64 Gew.-Teile der Lösung des Polyurethanharzes (A1) unter Rühren eingemischt. Diese Mischung wird weitere 30 Minuten mit einem Schnellrührer bei 1000 U/min gerührt.

### Herstellung der Basisfarbe (A"):

8 Gew.-Teile Paliogenblau, 73,5 Gew.-Teile der Lösung des Polyurethanharzes (A1), 10,5 Gew.-Teile Butylglykol und 8 Gew.-Teile iso-Butanol werden unter Rühren vermischt und mit einer Sandmühle dispergiert.

### Beispiel 2: Herstellung der Komponente B)

### Herstellung des Bindemittels (B1) für die Komponente B):

In einem geeigneten Reaktionsgefäß mit Rührer, Rückflußkuhler und Zulaufgefäß werden unter Schutzgas 686,3 g eines Polyesters mit einem zahlenmittleren Molekulargewicht Mn von 1400 Dalton auf Basis einer handelsüblichen ungesättigten Dimerfettsäure (mit einer Iodzahl von 10 mg I₂/g, einem Monomerengehalt von maximal 0,1%, einem Trimergehalt von maximal 2%, einer Säurezahl von 195 bis 200 mg KOH/g und einer Verseifungszahl von 197 bis 202 mg KOH/g), Isophthalsäure und Hexandiol vorgelegt und nacheinander mit 10,8 g Hexandiol, 55,9 g Dimethylolpropionsäure, 344,9 g Methylethylketon und 303,6 g 4,4'-Di(isocyanatocyclohexyl)methan versetzt.

Diese Mischung wird solange unter Rückfluß gehalten, bis der Isocyanatgehalt auf 1,0% abgesunken ist. Anschließend werden dem Gemisch 26,7 g Trimethylolpropan zugegeben und bis zu einer Viskosität von 12 dPas (bei einer Anlösung von Harz:N-Methylpyrrolidon = 1:1) unter Rückfluß gehalten.
Durch Zugabe von 47,7 g Butylglykol wird eventuell vorhandenes überschüssiges Isocyanat vernichtet.
Anschließend werden dem Reaktionsgemisch 32,7 g Dimethylethanolamin, 2688,3 entionisiertes Wasser und 193,0 g Butylglykol unter starkem Rühren zugegeben.
Nach dem Entfernen des Methylethylketons mittels Vakuumdestillation erhält man die Dispersion des Polyurethanharzes (B1) mit einem Feststoffgehalt von ca. 27%.

### Herstellung der Komponente B):

Zu 44 Gew.-Teilen der Dispersion des Polyurethanharz (B1) werden 52 Gew.-Teile entionisiertes Wasser, 0,5 Gew.-Teile eines handelsüblichen Entschäumers und 3,5 Gew.-Teile einer 3,5%igen Lösung eines handelsüblichen Polyacrylatverdickers in Wasser unter Rühren zugesetzt.

### Beispiel 3: Herstellung des wäßrigen Beschichtungsmittels BM1 nach dem Verfahren gemäß Anspruch 1:

### I. Stufe:

121,9 Volumen-Teile der Basisfarbe (A') gemäß Beispiel 1 und 49,6 Volumen-Teile der Basisfarbe (A") gemäß Beispiel 1 werden als Komponente A) mit 351,1 Volumen-Teilen der Komponente B) gemäß Beispiel 2 sowie 200 Volumen-Teilen eines Isocyanathärters (Glassodur® -Härter "sehr kurz" der Firma BASF Lacke+Farben auf Basis 1,6-Hexamethylendiisocyanat) als Komponente C) unter intensivem Rühren gemischt. Es resultiert die Vormischung VM1.

### II.Stufe:

Der Vormischung VM1 werden 463,4 Volumen-Teile Rheologiehilfsmittel (Einstellzusatz 93-E3 der Firma Glasurit auf Basis eines anorganischen Natrium-Magnesium-Schichtsilikat-Verdickungsmittels) als Komponente D) unter intensivem Rühren zugemischt. Es resultiert die Zwischenmischung ZM1. Abschließend werden der Zwischenmischung ZM1 unter intensivem Rühren 200 Volumen-Teile entionisiertes Wasser als Komponente E) zugemischt. Es resultiert das wäßrige Überzugsmittel BM1.

### Beispiel 4: Herstellung des wäßrigen Überzugsmittels BM2 nach dem Verfahren gemäß Anspruch 2:

### I. Stufe:

121,9 Volumen-Teile der Basisfarbe (A') gemäß Beispiel 1 und 49,6 Volumen-Teile der Basisfarbe (A") gemäß Beispiel 1 werden als Komponente A) mit 351,1 Volumen-Teilen der Komponente B) gemäß Beispiel 2 sowie 463,4 Volumen-Teilen Rheologiehilfsmittel (Einstellzusatz 93-E3 der Firma Glasurit) als Komponente D) unter intensivem Rühren gemischt. Es resultiert die Vormischung VM2.

### II.Stufe:

Der Vormischung VM2 werden 200 Volumen-Teile Isocyanathärter (Glassodur® -Härter "sehr kurz" der Firma BASF Lacke+Farben AG) als Komponente C) unter intensivem Rühren zugemischt. Es resultiert die Zwischenmischung ZM2.
Abschließend werden der Zwischenmischung ZM2 werden unter intensivem Rühren 200 Volumen-Teile entionisiertes Wasser als Komponente E) zugemischt. Es resultiert das wäßrige Beschichtungsmittel BM2.

### Beispiel 5: Applikation der wäßrigen Beschichtungsmittel BM1 und BM2 sowie Eigenschaften der resultierenden Lackierungen

Direkt im Anschluß an die Herstellung der wäßrigen Beschichtungsmittel BM1 und BM2 werden diese nach gut bekannten Methoden auf mit einer handelsüblichen Elektrotauchlackierung und einem konventionellen (d.h. lösemittelhaltigen) oder wasserhaltigen Füller beschichtete phosphatierte Stahlbleche (Bonder 132) gespritzt (2 Spritzgänge mit HLVP- oder Normal-Spritzpistole) und nach einer Ablüftzeit von 30 Minuten weitere 30 Minuten bei 60 Grad C getrocknet. Die Trockenfilmschichtdicke der wäßrigen Beschichtungsmittel BM1 bzw BM2 beträgt ca. 20 bis 25 Mikrometer.

Die resultierenden Lackschichten sind matt und von hoher Kratzfestigkeit. Bei der Lackierung von Fahrzeuginnenräumen kann der Farbton der Lackschicht durch identische Wahl und Kombination der Basisfarben genau auf den Farbton der Fahrzeugaußenlackierung, für die als weitere Beschichtung ein 2-Komponenten-Klarlack als Deckschicht aufgebracht werden muß (vergl beispielsweise DE-A-41 10 520), abgestimmt werden.

## Patentansprüche

1. Mehrstufiges Verfahren zur Herstellung von wäßrigen Beschichtungsmitteln BM zur Lackierung von Fahrzeuginnenräumen,
dadurch gekennzeichnet, daß
I. eine Vormischung VM aus:
einer Komponente A), enthaltend mindestens eine Basisfarbe (A), die weniger als 5 Gew.-% Wasser, mindestens ein Farb- und/oder effektgebendes Pigment, organisches Lösemittel, mindestens ein wasserverdünnbares oder wasserdispergierbares hydroxylgruppenhaltiges Bindemittelharz sowie gegebenenfalls
Hilfs- und Zusatzstoffe enthält,
einer pigmentfreien wäßrigen Komponente B), enthaltend mindestens ein gegebenenfalls hydroxylgruppenhaltiges Bindemittel (B1), sowie
einer Komponente C), bestehend aus einer Lösung oder einer Dispersion eines Di- und/oder Polyisocyanats (C1) oder eines Gemischs von Di- und/oder Polyisocyanaten (C1), hergestellt wird,
und daß anschließend:
II. das wäßrige Beschichtungsmittel BM hergestellt wird, indem der Vormischung VM eine wäßrige Lösung oder Dispersion eines Rheologiehilfsmittels (D1) als Komponente D) zugemischt wird, sowie abschließend die Verarbeitungsviskosität des wäßrigen Beschichtungsmittels BM durch Zugabe von entionisiertem Wasser als Komponente E) eingestellt wird.

2. Mehrstufiges Verfahren zur Herstellung von wäßrigen Beschichtungsmitteln BM zur Lackierung von Fahrzeuginnenräumen,
dadurch gekennzeichnet, daß
I. eine Vormischung VM hergestellt wird aus:
einer Komponente A), enthaltend mindestens eine Basisfarbe (A), die weniger als 5 Gew.-% Wasser, mindestens ein Farb- und/oder effektgebendes Pigment,
organisches Lösemittel, mindestens ein wasserverdünnbares oder wasserdispergierbares hydroxylgruppenhaltiges Bindemittelharz sowie gegebenenfalls
Hilfs- und Zusatzstoffe enthält,
einer pigmentfreien wäßrigen Komponente B), enthaltend mindestens ein gegebenenfalls hydroxylgruppenhaltiges Bindemittel (B1), sowie
einer wäßrigen Lösung oder einer wäßrigen Dispersion eines Rheologiehilfsmittels (D1) als Komponente D), hergestellt wird
und daß anschließend:
II. das wäßrige Beschichtungsmittel BM hergestellt wird, indem der Vormischung VM eine Lösung oder Dispersion eines Di- und/oder Polyisocyanats (C1) oder eines Gemischs von Di- und/oder Polyisocyanaten (C1) als Komponente C) zugemischt wird, sowie abschließend die Verabeitungsviskosität des wäßrigen Beschichtungsmittels BM durch Zugabe von entionisiertem Wasser als Komponente E) eingestellt wird.

3. Mehrstufiges Verfahren nach Anspruch 1 oder 2,
dadurch gekennzeichnet, daß das wasserverdünnbare oder wasserdispergierbare hydroxylgruppenhaltige Bindemittelharz der Komponente A) mindestens ein wasserverdünnbares oder wasserdispergierbares hydroxylgruppenhaltiges Polyacrylatharz (A2) mit einer Hydroxylzahl zwischen 5 und 40 mg KOH/g und/oder mindestens ein wasserverdünnbares oder wasserdispergierbares hydroxylgruppenhaltiges, gegebenenfalls acryliertes Polyurethanharz (A1) mit einer Hydroxylzahl zwischen 20 und 100 mg KOH/g enthält.

4. Mehrstufiges Verfahren nach einem der Ansprüche 1 bis 3, dadurch gekennzeichnet, daß die in der Komponente A) enthaltenen Basisfarben (A) wasserfrei sind.

5. Mehrstufiges Verfahren nach einem der Ansprüche 1 bis 4, dadurch gekennzeichnet, daß die Basisfarbe (A)
Aa) 0,5 bis 70 Gew.-% mindestens eines Effektpigments und/oder mindestens eines farbgebenden Pigments,
Ab) 10 bis 80 Gew.-% mindestens eines wasserverdünnbaren oder wasserdispergierbaren hydroxylgruppenhaltigen Bindemittels,
Ac) mindestens ein organisches Lösemittel, sowie gegebenenfalls
Ad) Hilfs- und Zusatzstoffe
enthält, wobei die Summe der Gewichtsanteile der Komponenten Aa) bis Ad) 100 Gew.-% der Komponente A) ausmachen.

6. Mehrstufiges Verfahren nach einem der Ansprüche 1 bis 5, dadurch gekennzeichnet, daß die Komponente A) Basisfarben (A'), die nur Effektpigmente enthalten, und Basisfarben (A"), die nur farbgebende Pigmente enthalten, enthält.

7. Mehrstufiges Verfahren nach einem der Ansprüche 1 bis 6, dadurch gekennzeichnet, daß das Bindemittel (B1) der wäßrigen pigmentfreien Komponente B) mindestens ein Polyacrylatharz (A2) gemäß Anspruch 3 und/oder mindestens ein gegebenenfalls acryliertes Polyurethanharz (A1) gemäß Anspruch 3 enthält.

8. Mehrstufiges Verfahren nach einem der Ansprüche 1 bis 7, dadurch gekennzeichnet, daß die Di- und/oder Polyisocyanate (C1) Isomeren oder Isomerengemische von aliphatischen und/oder cycloaliphatischen und/oder aromatischen Di- und/oder Polyisocyanaten sind.

9. Mehrstufiges Verfahren nach einem der Ansprüche 1 oder 3 bis 8,
dadurch gekennzeichnet, daß in Komponente D) als Rheologiehilfsmittel (D1) Schichtsilikate eingesetzt werden.

10. Mehrstufiges Verfahren nach einem der Ansprüche 1 bis 9, dadurch gekennzeichnet, daß
I. eine Vormischung VM aus:
5 bis 85 Gew.-%, bevorzugt 10 bis 75 Gew.-%, der pigmenthaltigen Komponente A),
10 bis 90 Gew.-%, bevorzugt 15 bis 85 Gew.-%, der bindemittelhaltigen wäßrigen Komponente B) und
5 bis 50 Gew.-%, bevorzugt 10 bis 40 Gew.-%, der vernetzerhaltigen Komponente C) hergestellt wird, wobei die Summe der Komponenten A), B) und C) 100 Gew.-% der Vormischung VM ausmacht,
und daß anschließend:
II. das wäßrige Beschichtungsmittel BM aus:
10 bis 95 Gew.-%, bevorzugt 20 bis 90 Gew.-%, der Vormischung VM und
5 bis 90 Gew.-%, bevorzugt 10 bis 80 Gew.-%, der rheologiesteuernden Komponente D) hergestellt wird, sowie daß abschließend dem Beschichtungsmittel BM zur Einstellung der Verarbeitungsviskosität entionisiertes Wasser als Komponente E) zugesetzt wird.

11. Mehrstufiges Verfahren nach einem der Ansprüche 2 bis 9, dadurch gekennzeichnet, daß
I. eine Vormischung VM aus:
5 bis 85 Gew.-%, bevorzugt 10 bis 75 Gew.-%, der pigmenthaltigen Komponente A),
10 bis 90 Gew.-%, bevorzugt 15 bis 85 Gew.-%, der bindemittelhaltigen wäßrigen Komponente B) und
5 bis 85 Gew.-%, bevorzugt 10 bis 75 Gew.-%, der rheologiesteuernden Komponente D), hergestellt wird, wobei die Summe der Komponenten A), B) und D) 100 Gew.-% der Vormischung VM ausmacht,
und daß anschließend:
II. das wäßrige Beschichtungsmittel BM aus:
50 bis 95 Gew.-%, bevorzugt 60 bis 90 Gew.-%, der Vormischung VM und
5 bis 50 Gew.-%, bevorzugt 10 bis 40 Gew.-%, der vernetzerhaltigen Komponente C) hergestellt wird, sowie daß abschließend dem Beschichtungsmittel BM zur Einstellung der Verarbeitungsviskosität entionisiertes Wasser als Komponente E) zugegeben wird.

12. Wäßrige Beschichtungsmittel BM hergestellt nach dem mehrstufigen Verfahren gemäß einem der Ansprüche 1 bis 11.

13. Verwendung der wäßrigen Beschichtungsmittel BM nach Anspruch 12 als Wasserbasislack für die Beschichtung von Fahrzeuginnenräumen und/oder von Kunststoffteilen.

14. Verwendung der wäßrigen Beschichtungsmittel BM nach Anspruch 12 als Autoreparaturlack für die Beschichtung von Fahrzeuginnenräumen und/oder von Kunststoffteilen.

## Claims

1. Multistage process for the preparation of aqueous coating compositions BM for the painting of vehicle interiors, characterized in that
I. a premix VM is prepared from:
a component A) containing at least one base paint (A) which comprises less than 5% by weight of water, at least one colour and/or special-effect pigment, organic solvent, at least one water-dilutable or water-dispersible hydroxyl-containing binder resin and, optionally, auxiliaries and additives,
a pigment-free aqueous component B) comprising at least one optionally hydroxyl-containing binder (B1), and
a component C) consisting of a solution or dispersion of a di- and/or polyisocyanate (C1) or of a mixture of di- and/or polyisocyanates (C1),
and in that subsequently:
II. the aqueous coating composition BM is prepared by admixing to the premix VM an aqueous solution or dispersion of a rheological auxiliary (D1) as component D), and finally the processing viscosity of the aqueous coating composition BM is established by adding deionized water as component E).

2. Multistage process for the preparation of aqueous coating compositions BM for the painting of vehicle interiors, characterized in that
I. a premix VM is prepared from:
a component A) containing at least one base paint (A) which comprises less than 5% by weight of water, at least one colour and/or special-effect pigment, organic solvent, at least one water-dilutable or water-dispersible hydroxyl-containing binder resin and, optionally, auxiliaries and additives,
a pigment-free aqueous component B) comprising at least one optionally hydroxyl-containing binder (B1), and
an aqueous solution or an aqueous dispersion of a rheological auxiliary (D1) as component D),
and in that subsequently:
II. the aqueous coating composition BM is prepared by admixing to the premix VM a solution or dispersion of a di- and/or polyisocyanate (C1) or of a mixture of di- and/or polyisocyanates (C1) as component C), and finally the processing viscosity of the aqueous coating composition BM is established by adding deionized water as component E).

3. Multistage process according to Claim 1 or 2, characterized in that the water-dilutable or water-dispersible hydroxyl-containing binder resin of component A) comprises at least one water-dilutable or water-dispersible hydroxyl-containing polyacrylate resin (A2) having a hydroxyl number of between 5 and 40 mg of KOH/g and/or at least one water-dilutable or water-dispersible hydroxyl-containing, optionally acrylicized polyurethane resin (A1) having a hydroxyl number of between 20 and 100 mg of KOH/g.

4. Multistage process according to one of Claims 1 to 3, characterized in that the base paints (A) present in component A) are free from water.

5. Multistage process according to one of Claims 1 to 4, characterized in that the base paint (A) contains
Aa) from 0.5 to 70% by weight of at least one special-effect pigment and/or at least one colour pigment,
Ab) from 10 to 80% by weight of at least one water-dilutable or water-dispersible, hydroxyl-containing binder,
Ac) at least one organic solvent, and optionally
Ad) auxiliaries and additives,
the sum of the proportions by weight of components Aa) to Ad) making up in each case 100% by weight of component A).

6. Multistage process according to one of Claims 1 to 5, characterized in that component A) comprises base paints (A') containing only special-effect pigments and base paints (A") containing only colour pigments.

7. Multistage process according to one of Claims 1 to 6, characterized in that the binder (B1) of the aqueous pigment-free component B) contains at least one polyacrylate resin (A2) according to Claim 3 and/or at least one optionally acrylicized polyurethane resin (A1) according to Claim 3.

8. Multistage process according to one of Claims 1 to 7, characterized in that the di- and/or polyisocyanates (C1) are isomers or isomer mixtures of aliphatic and/or cycloaliphatic and/or aromatic di- and/or polyisocyanates.

9. Multistage process according to one of Claims 1 or 3 to 8,
characterized in that in component D), as rheological auxiliaries (D1), phyllosilicates are employed.

10. Multistage process according to one of Claims 1 to 9, characterized in that
I. a premix VM of:
from 5 to 85% by weight, preferably from 10 to 75% by weight, of the pigment-containing component A),
from 10 to 90% by weight, preferably from 15 to 85% by weight, of the binder-containing aqueous component B), and
from 5 to 50% by weight, preferably from 10 to 40% by weight, of the component C) containing crosslinking agent is prepared,
the sum of components A), B) and C) making up 100% by weight of the premix VM,
and in that then:
II. the aqueous coating composition BM is prepared from:
from 10 to 95% by weight, preferably from 20 to 90% by weight, of the premix VM and
from 5 to 90% by weight, preferably from 10 to 80% by weight, of the rheology-controlling component D), and in that finally the processing viscosity is established by adding deionized water as component E) to the coating composition BM.

11. Multistage process according to one of Claims 2 to 9, characterized in that
I. a premix VM of:
from 5 to 85% by weight, preferably from 10 to 75% by weight, of the pigment-containing component A),
from 10 to 90% by weight, preferably from 15 to 85% by weight, of the binder-containing aqueous component B), and
from 5 to 85% by weight, preferably from 10 to 75% by weight, of the rheology-controlling component D) is prepared, the sum of components A), B) and D) making up 100% by weight of the premix VM,
and in that then:
II. the aqueous coating composition BM is prepared from:
from 50 to 95% by weight, preferably from 60 to 90% by weight, of the premix VM and
from 5 to 50% by weight, preferably from 10 to 40% by weight, of the component C) containing crosslinking agent, and in that finally the processing viscosity is established by adding deionized water as component E) to the coating composition BM.

12. Aqueous coating compositions BM prepared by the multistage process according to one of Claims 1 to 11.

13. Use of the aqueous coating compositions BM according to Claim 12 as water-based paint for the coating of vehicle interiors and/or of plastics components.

14. Use of the aqueous coating compositions BM according to Claim 12 as automotive refinish paint for the coating of vehicle interiors and/or of plastics components.

## Revendications

1. Procédé à plusieurs étapes pour la préparation de compositions de revêtements aqueuses BM destinées aux revêtements d'intérieurs de véhicules,
caractérisé en ce que
I. On prépare un prémélange VM à partir de :
un composant A) contenant au moins une peinture de base (A) comprenant moins de 5% en poids d'eau, au moins un pigment colorant et/ou à effet, un solvant organique, au moins une résine liante renfermant des groupes hydroxy, diluable à l'eau ou dispersable dans l'eau, et éventuellement des auxiliaires et des additifs,
un composant aqueux E) exempt de pigment comprenant au moins un liant (B1) renfermant éventuellement des groupes hydroxy, et
un composant C) constitué d'une solution ou d'une dispersion d'un di- et/ou polyisocyanate (C1) ou d'un mélange de di- et/ou polyisocyanate (C1),
et en ce que, ensuite :
II. On prépare la composition de revêtement aqueuse BM en mélangeant une solution ou dispersion aqueuse d'un auxiliaire rhéologique (D1) en tant que composant D) avec le prémélange VM, et on ajuste finalement la viscosité de mise en oeuvre de la composition de revêtement aqueuse BM en ajoutant de l'eau désionisée en tant que composant E).

2. Procédé à plusieurs étapes pour la préparation de compositions de revêtements aqueuses BM destinées aux revêtements d'intérieurs de véhicules,
caractérisé en ce que
I. On prépare un prémélange VM à partir de :
un composant A) contenant au moins une peinture de base (A) comprenant moins de 5% en poids d'eau, au moins un pigment colorant et/ou à effet, un solvant organique, au moins une résine liante renfermant des groupes hydroxy, diluable à l'eau ou dispersable dans l'eau, et éventuellement des auxiliaires et des additifs,
un composant aqueux E) exempt de pigment comprenant au moins un liant (B1) renfermant éventuellement des groupes hydroxy, et
une solution aqueuse ou une dispersion aqueuse d'un auxiliaire rhéologique (D1) en tant que composant D),
et en ce que, ensuite :
II. on prépare la composition de revêtement aqueuse BM en mélangeant une solution ou dispersion d'un di- et/ou polyisocyanate (C1) ou d'un mélange de di- et/ou polyisocyanates (C1) en tant que composant C) avec le prémélange VM, et on ajuste ensuite la viscosité de mise en oeuvre de la composition de revêtement aqueuse BM en ajoutant de l'eau désionisée en tant que composant E).

3. Procédé à plusieurs étapes selon la revendication 1 ou 2, caractérisé en ce que la résine liante renfermant des groupes hydroxy, diluable à l'eau ou dispersable dans l'eau, du composant A) comprend au moins une résine de polyacrylate (A2) renfermant des groupes hydroxy, diluable à l'eau ou dispersable dans l'eau, ayant un indice d'hydroxy compris entre 5 et 40 mg KOH/g et/ou au moins une résine de polyuréthanne (A1) renfermant des groupes hydroxy, diluable à l'eau ou dispersable dans l'eau, éventuellement acrylée ayant un indice d'hydroxy compris entre 20 et 100 mg KOH/g.

4. Procédé à plusieurs étapes selon l'une quelconque des revendications 1 à 3, caractérisé en ce que les peintures de base (A) présentes dans le composant A)sont exemptes d'eau.

5. Procédé à plusieurs étapes selon l'une quelconque des revendications 1 à 4, caractérisé en ce que la peinture de base (A) contient
Aa) de 0,5 à 70% en poids d'au moins un pigment à effet et/ou d'au moins un pigment colorant,
Ab) de 10 à 80% en poids d'au moins un liant renfermant des groupes hydroxy, diluable à l'eau ou dispersable dans l'eau,
Ac) au moins un solvant organique, et éventuellement
Ad) des auxiliaires et des additifs,
la somme des proportions pondérales des composants Aa) à Ad) représentant 100% en poids du composant A).

6. Procédé à plusieurs étapes selon l'une quelconque des revendications 1 à 5, caractérisé en ce que le composant A) renferme des peintures de base (A') qui ne contiennent que des pigments à effet et des peintures de base (A") qui ne contiennent que des colorants.

7. Procédé à plusieurs étapes selon l'une quelconque des revendications 1 à 6, caractérisé en ce que le liant (B1) du composant aqueux B) exempt de pigment comprend au moins une résine de polyacrylate A2) selon la revendication 3 et/ou au moins une résine de polyuréthanne (A1) éventuellement acrylée selon la revendication 3.

8. Procédé à plusieurs étapes selon l'une quelconque des revendications 1 à 7, caractérisé en ce que les di- et/ou polyisocyanates (C1) sont des isomères ou des mélanges d'isomères de di- et/ou polyisocyanates aliphatiques et/ou cycloaliphatiques et/ou aromatiques.

9. Procédé à plusieurs étapes selon l'une quelconque des revendications 1 ou 3 à 8, caractérisé en ce que l'on utilise des phyllosilicates en tant qu'auxiliaires rhéologiques (D1) dans le composant D).

10. Procédé à plusieurs étapes selon l'une quelconque des revendications 1 à 9, caractérisé en ce que
I. on prépare un prémélange VM à partir de :
5 à 85% en poids, de préférence 10 à 75% en poids, du composant A) contenant du pigment,
10 à 90% en poids, de préférence 15 à 85% en poids, du composant aqueux E) contenant du liant et
5 à 50% en poids, de préférence 10 à 40% en poids, du composant C) contenant de l'agent de réticulation,
la somme des composants A) , B) et C) représentant 100% en poids du prémélange VM,
et en ce que, ensuite :
II. on prépare la composition de revêtement aqueuse BM à partir de :
10 à 95% en poids, de préférence 20 à 90% en poids, du prémélange VM et
5 à 90% en poids, de préférence 10 à 80% en poids, du composant D) régulant la rhéologie, et en ce que l'on ajoute finalement de l'eau désionisée en tant que composant E) à la composition de revêtement BM en vue d'ajuster la viscosité de mise en oeuvre.

11. Procédé à plusieurs étapes selon l'une quelconque des revendications 2 à 9, caractérisé en ce que
I. on prépare un prémélange VM à partir de :
5 à 85% en poids, de préférence 10 à 75% en poids, du composant A) contenant du pigment,
10 à 90% en poids, de préférence 15 à 85% en poids, du composant aqueux B) contenant du liant et
5 à 85% en poids, de préférence 10 à 75% en poids, du composant B) régulant la rhéologie,
la somme des composants A), B) et D) représentant 100% en poids du prémélange VM,
et en ce que, ensuite :
II. on prépare la composition de revêtement aqueuse BM à partir de :
50 à 95% en poids, de préférence 60 à 90% en poids du prémélange VM et
5 à 50% en poids, de préférence 10 à 40% en poids, du composant C) contenant de l'agent de réticulation,
et en ce que l'on ajoute finalement de l'eau désionisée en tant que composant E) à la composition de revêtement BM en vue d'ajuster la viscosité de mise en oeuvre.

12. Composition de revêtement aqueuse BM préparée par le procédé à plusieurs étapes selon l'une des revendications 1 à 11.

13. Utilisation des compositions de revêtements aqueuses BM selon la revendication 12 en tant que peinture à base d'eau pour le revêtement d'intérieurs de véhicules et/ou de composants plastiques.

14. Utilisation des compositions de revêtements aqueuses BM selon la revendications 12 en tant que peinture de retouches pour automobiles pour le revêtement d'intérieurs de véhicules et/ou de composants plastiques.
